# EUROPÄISCHE PATENTANMELDUNG

(11) **EP 2 667 342 A1**
(43) Veröffentlichungstag der Anmeldung: **27.11.2013**
(21) Anmeldenummer: 13157863.5
(22) Anmeldetag: 05.03.2013
(51) Int. Cl.: G06Q 20/10

(54) **Anordnung zur Einrichtung und Durchführung eines Vielspender-Sparvorhabens**

(30) Priorität: 22.05.2012 DE 102012104414
(71) Anmelder: Deutsche Postbank AG, 53113 Bonn (DE)
(72) Erfinder: Siering, Sven, 53347 Alfter (DE); Matzerath, Knud, 53925 Kall (DE)
(74) Vertreter: Patentanwälte ter Smitten Eberlein Rütten Partnerschaftsgesellschaft

(57) **Zusammenfassung**

Die Erfindung bezieht sich auf eine Anordnung (10) zur Einrichtung und Durchführung eines Vielspender- Sparvorhabens durch eine Sparerperson im Rahmen eines Internet- Sozialnetzwerks, wobei die Sparerperson und eine Spenderperson Mitglieder des Sozialnetzwerks sind, die Sparerperson über ein eigenes Kontokorrentkonto (58) bei einem Sparerperson-Bankhaus verfügt und die Spenderperson über ein Kontokorrentkonto (72) bei einem Spender-Bankhaus verfügt, mit
einem Sozialnetzwerk- Server (20) mit einer Mitglieder-Datenbank (92), in der Datensätze der Mitglieder zur Generierung einer individuellen Mitglieder-Webseite (32,32') gespeichert sind,
einem Sparvorhaben- Datensatz (53) auf einem Server (50) des Sparerperson-Bankhauses, der eine Sparerperson- Identifikation SI, eine Spendenperson- Kontokorrentkonto- Identifikation SK und einen Ziel-Sparbetrag ZE enthält,
einem Sparbetrag-Verrechnungskonto (60) auf dem Server (50) des Sparerperson- Bankhauses, auf dem ein Ist- Sparbetrag IE akkumuliert wird,
einem Spenden- Steuerungsprogramm (54) auf einem Server (50) des Sparerperson- Bankhauses, das einen durch die Spenderperson eingegebenen Spendenbetrag SE von einem durch die Spenderperson eingegeben Spenderperson- Kontokurrentkonto (72) auf dem Sparbetrag-Verrechnungskonto (60) gutschreibt, und
einem Sparvorhaben- Applikationsprogramm (52), das innerhalb der Mitglieder-Webseite (32,32') der Sparerperson Steuerelemente und/oder Informationen über das Sparvorhaben anzeigt.

## Beschreibung

Die Erfindung bezieht sich auf eine Anordnung zur Einrichtung und Durchführung eines Vielspender- Sparvorhabens sowie auf ein Verfahren zur Einrichtung und zur Durchführung eines derartigen Sparvorhabens.

Ein klassisches Sparvorhaben einer Sparerperson, bei dem der Sparbetrag auf einem Kontokorrentkonto der Sparerperson gespart wird, kann im Prinzip nur dadurch realisiert werden, dass die Spenderperson(en) per Überweisung Spendenbeträge auf das Sparerperson- Kontokorrentkonto überweisen. Dies ist zum Einen umständlich, und zum Anderen können die Spenderpersonen dem Verlauf und Erfolg des Sparvorhabens nicht unmittelbar nachvollziehen.

Aufgabe der Erfindung ist es demgegenüber, eine Anordnung und ein Verfahren für die einfache und transparente Durchführung eines Sparvorhabens zu schaffen.

Diese Aufgabe wird erfindungsgemäß gelöst mit einer Anordnung gemäß Anspruch 1 sowie Verfahren gemäß den Ansprüchen 4 und 6.

Die Anordnung gemäß Anspruch 1 dient der Einrichtung und Durchführung eines Vielspender- Sparvorhabens durch eine Sparerperson. Ein Vielspender- Sparvorhaben ist ein Sparvorhaben, bei dem nicht alleine die Sparerperson einzahlen kann, sondern im Prinzip auch jede dritte Person einen Spendenbetrag auf ein Kontokorrentkonto der Sparerperson spenden kann. Da viele Personen bereits über internetgestützte Sozialnetzwerke miteinander vernetzt sind, ist die erfindungsgemäße Anordnung und die darauf basierenden Verfahren auf ein derartiges Sozialnetzwerk, wie beispielsweise Facebook, gestützt.

Das Kontokorrentkonto der Sparerperson liegt bei einem Sparerperson-Bankhaus, wohingegen ein Guthaben der Spenderperson bei einem Bankhaus der Spenderperson liegt. Beide Kontokorrentkonten sind sogenannte Girokonten, über die der tägliche Zahlungsverkehr abgewickelt werden kann.

Sowohl die Sparerperson als auch die Spenderperson sind über ihren eigenen Computer mit dem Internet verbunden. Der Sozialnetzwerk-Betreiber hat einen Sozialnetzwerk-Server mit einer Mitglieder-Datenbank, in der Datensätze der Sozialnetzwerk-Mitglieder gespeichert sind. Mit Hilfe dieser Mitglieder-Datensätze kann auf den Computern der Sparerperson und der Spenderperson eine individuelle Mitglieder-Webseite der Sparerperson generiert werden. Auf diese Weise hat die Sparerperson eine individuelle Mitglieder-Webseite innerhalb des Sozialnetzwerks, auf die alle hierzu autorisierten Personen und potentiellen Spenderpersonen, die ebenfalls Mitglieder des Sozialnetzwerks sind, Zugriff haben. Hierbei können sie mindestens einige der in dem Mitglieder-Datensatz der Sparerperson gespeicherten Informationen angezeigt bekommen.

Das Bankhaus, bei dem die Sparerperson über ein Kontokorrentkonto verfügt, wird nachfolgend stets als Sparerperson-Bankhaus bezeichnet. Auf dem Server des Sparerperson-Bankhauses ist ein Sparvorhaben-Datensatz gespeichert, der alle relevanten Informationen eines Sparvorhabens enthält, insbesondere eine Sparerperson-Identifikation, also den Namen der Sparerperson, eine Angabe über das Kontokorrentkonto der Sparerperson und einen Ziel-Sparbetrag. Der Sparerperson der Sparvorhaben- Datensatz enthält alle Informationen, die für das Sparvorhaben für die Durchführung des Sparvorhabens erforderlich sind.

Auf dem Server des Sparerperson-Bankhauses ist ein Sparbetrag-Verrechnungskonto eingerichtet, auf dem ein Ist-Sparbetrag akkumuliert wird. Das Sparbetrag-Verrechnungskonto kann grundsätzlich ein separates virtuelles Konto sein, kann ein separates Kontokorrentkonto sein, eine Kombination aus beiden, kann jedoch grundsätzlich auch identisch mit dem Sparerperson- Kontokorrentkonto sein. Bevorzugt ist das Sparbetrag-Verrechnungskonto ein virtuelles Verrechnungskonto, dem ein entsprechendes reales separates Kontokorrentkonto zugeordnet ist. Für jedes Sparvorhaben kann ein eigenes separates Kontokorrentkonto und ein korrespondierendes Sparbetrag-Verrechnungskonto vorgesehen sein.

Auf dem Server des Sparerperson-Bankhauses ist ein Sparvorhaben-Applikationsprogramm angeordnet, das innerhalb der Mitglieder-Webseite der Sparerperson Steuerelemente und/oder Informationen über das Sparvorhaben generiert. Das Sparvorhaben- Applikationsprogramm ist technisch in der Lage, innerhalb der Mitglieder-Webseite des

Sozialnetzwerks in einem eigenen Rahmen oder Fenster, beispielsweise in einem sogenannten iFrame, Inhalte des Sparvorhabens direkt anzuzeigen.

Das Applikationsprogramm steht mit dem betreffenden Rahmen innerhalb der Mitglieder-Webseite in direkter Verbindung, so dass die zwischen dem Computer der Sparerperson oder der Spenderperson einerseits und dem Applikationsprogramm auf dem Server des Sparerperson-Bankhauses andererseits ausgetauschten Informationen nicht über einen anderen Server, beispielsweise den Sozialnetzwerk-Server, laufen.

Auf dem Server des Sparerperson-Bankhauses ist ferner ein Spenden-Steuerungsprogramm gespeichert, das einen durch die Spenderperson eingegebenen Spendenbetrag von einem durch die Spenderperson eingegebenen Spenderperson- Kontokorrentkonto auf dem Sparbetrag-Verrechnungskonto gutschreibt bzw. den betreffenden Transfer steuert. Das Spenden- Steuerungsprogramm und das Sparvorhaben-Applikationsprogramm können grundsätzlich in einem einzigen Computerprogramm zusammengefasst sein, sind bevorzugt jedoch in getrennten Modulen oder Programmen ausgestaltet.

Gemäß einer bevorzugten Ausgestaltung zeigt das Sparvorhaben-Applikationsprogramm den auf dem Verrechnungskonto akkumulierten Ist-Sparbetrag auf der Mitglieder-Webseite der Sparerperson an. Die Anzeige des Ist-Sparbetrages erfolgt jedoch nicht notwendigerweise als absoluter Betrag, sondern beispielsweise in einer Verrechnungs- Währung oder aber als prozentualer Anteil an dem Ziel-Sparbetrag. Auf diese Weise können die hierzu autorisierten Sozialnetzwerk-Mitglieder den Verlauf des Sparvorhabens miterfolgen.

Gemäß einer bevorzugten Ausgestaltung generiert das Sparvorhaben-Applikationsprogramm einen auf der Mitglieder-Webseite der Sparerperson angezeigten Spendenschalter, der mit einer Spendeneingabe-Seite auf dem Server des Sparerperson-Bankhauses verknüpft ist. Der Spendenschalter wird also von allen hierzu autorisierten Sozialnetzwerk-Mitgliedern auf der Sparerperson-Webseite gesehen und kann von diesen betätigt bzw. angeklickt werden. Durch Anklicken des Spendenschalters wird das betreffende Sozialnetzwerk-Mitglied auf die Spendeneingabe-Seite geleitet, in der die Spenderpersonen den Spendenbetrag und die erforderlichen Angaben zu seinem Spenderperson- Kontokorrentkonto eingeben kann. Die Spendeneingabe- Seite wird unmittelbar von dem Sparvorhaben- Applikationsprogramm generiert, so dass die von der Spenderperson gemachten Eingaben direkt an den Server des Sparerperson-Bankhauses gesendet werden, nicht jedoch über einen anderen Server außerhalb des Sparerperson-Bankhauses.

Gemäß dem Verfahren zur Durchführung des Vielspender- Sparvorhabens sind die folgenden Verfahrensschritte vorgesehen:
Aufruf des Sparvorhaben- Applikationsprogramms durch die Spenderperson,
Eingabe der Spendendaten einschließlich eines Spendenbetrags und der Angaben zu dem Spenderperson- Kontokorrentkonto durch die Spenderperson in das Sparvorhaben- Applikationsprogramm,
Übermittlung der Spendendaten von dem Sparvorhaben-Applikationsprogramm an das Spenden- Steuerungsprogramm, und
Transfer des Spendenbetrags durch das Spenden-Steuerungsprogramm von dem Spenderperson- Kontokorrentkonto auf das Verrechnungskonto.

Zunächst stellt die Spenderperson mit ihrem Computer, beispielsweise durch Anklicken des Spendenschalters auf der Mitglieder-Webseite der Sparerperson, eine Verbindung zu einer Spendeneingabe-Webseite her, die durch das Sparvorhaben-Applikationsprogramm auf dem Spenderperson- Computer dargestellt wird. Die Spenderperson gibt die Spendendaten über die Spendeneingabe- Webseite in das Sparvorhaben-Applikationsprogramm ein. Als Spendendaten sind alle Daten anzusehen, die für den Transfer des Spendenbetrags erforderlich sind, also insbesondere die Höhe des Spendenbetrags und alle Angaben zu der Bankverbindung der Spenderperson und der Autorisation für den Transfer des Spendenbetrags. Die Autorisation hängt im Wesentlichen von der rechtlichen Gestalt des Transfers ab, wobei hierbei der Bankeinzug, auch Lastschrift genannt, bevorzugt zu nennen ist. Bei dem Bankeinzug wird das Sparerperson-Bankhaus autorisiert, bei dem Spenderperson-Bankhaus von dem betreffenden Kontokorrentkonto den betreffenden Betrag einzuziehen. Alternative Spendenbetrag-Transfer-Formen sind grundsätzlich alle zulässigen Transfer-Formen, z.B. die Überweisung, Lastschrift, Kreditkarte, PayPal etc.

Nach der Eingabe der Spendendaten in das Sparvorhabens-Applikationsprogramm werden die Spendendaten an das Spenden-Steuerungsprogramm übermittelt bzw. übergeben. Das Spenden-Steuerungsprogramm initiiert und kontrolliert anschließend den Transfer des Spendenbetrags von dem Spenderperson-Kontokorrentkonto auf das Verrechnungskonto. Hierzu eignet sich insbesondere das Lastschrift-Verfahren .

Vorzugsweise prüft ein entsprechendes Prüfprogramm auf dem Server des Spenderperson-Bankhauses regelmäßig, ob der Ziel-Sparbetrag erreicht ist oder ob ein durch die Sparerperson bei der Einrichtung des Sparvorhabens angegebener Spar- Endzeitpunkt erreicht ist. Wenn der Ziel-Sparbetrag oder der Spar- Endzeitpunkt erreicht ist, initiiert das Spenden-Steuerungsprogramm die Überweisung des Ist-Sparbetrag von dem Sparbetrag-Verrechnungskonto auf das Sparerperson-Kontokorrentkonto. Anschließend wird die Sparerperson hierüber informiert und wird das Sparvorhaben gelöscht.

Gemäß einem Verfahren zur Einrichtung eines Vielspender-Sparvorhabens sind folgende Verfahrensschritte vorgesehen:
Eingabe der Spardaten des Sparvorhabens einschließlich einer Angabe des Sparerperson- Kontokorrentkontos und des Ziel-Sparbetrags über das Sparvorhaben- Applikationsprogramm,
Übertragung der Spardaten von dem Sparvorhaben-Applikationsprogramm zu dem Sparvorhaben- Steuerungsprogramm,
Prüfung der Spardaten durch das Sparvorhaben- Steuerungsprogramm,
bei positiver Spardaten- Prüfung: Übertragung einer Sparvorhaben-Freigabe von dem Sparvorhaben- Steuerungsprogramm an das Sparvorhaben- Applikationsprogramm, und
Einrichtung eines Spendenschalters durch das Sparvorhaben-Applikationsprogramm auf der Mitglieder-Webseite der Sparerperson.

Die Sparerperson gelangt beispielsweise durch Anklicken eines Werbebanners auf eine Sparvorhaben-Eingabe-Webseite, die von dem Sparvorhaben-Applikationsprogramm generiert wird. Die Webseite weist eine Sparvorhaben-Eingabemaske auf, über die das Sparvorhaben durch die Sparerperson eingegeben werden kann. Hier gibt die Sparerperson die notwendigen Spardaten des Sparvorhabens ein, nämlich eine Identifikation des Sparperson-Kontokorrentkontos, den Ziel-Sparbetrag, einen Spar- Endzeitpunkt und einen Spar- Gegenstand. Die Spardaten gelangen auf diese Weise in den Sparvorhaben-Datensatz auf dem Server des Sparperson-Bankhauses. Die Spardaten werden anschließend zu dem Sparvorhaben-Steuerungsprogramm übertragen, das in die eingegebenen Spardaten auf Plausibilität prüft. Ferner prüft das Sparvorhaben-Steuerungsprogramm, ob das durch die Sparerperson angegebene Sparerperson-Kontokorrentkonto bei dem Sparerperson-Bankhaus existiert. Gegebenenfalls können weitere Überprüfungen bezüglich der Seriosität der Sparerperson durchgeführt werden.

Bei positiver Prüfung der Spardaten wird das Sparvorhaben von dem Sparvorhaben-Steuerungsprogramm freigegeben, und diese Freigabe an das Sparvorhaben-Applikationsprogramm übersandt. Das Sparvorhaben-Applikationsprogramm generiert anschließend einen virtuellen Spendenschalter auf der Mitglieder-Webseite der Sparerperson.

Gemäß einer bevorzugten Ausgestaltung wird nach der positiven Prüfung der Spardaten ein Aktivierungskode durch das Sparvorhaben-Steuerungsprogramm oder durch das Sparvorhaben-Applikationsprogramm generiert. Anschließend wird durch das Sparvorhaben-Steuerungsprogramm eine Verifizierungsüberweisung durchgeführt, indem ein niedriger Verifizierungsbetrag von dem Sparerperson- Kontokorrentkonto auf das Sparbetrag- Verrechnungskonto überwiesen wird. Mit der Überweisung wird in einem Freitextfeld des Überweisungs- Datensatzes der Aktivierungskode übermittelt, der als Freitext in dem der Sparerperson zugänglichen Kontoauszug sichtbar wird. Innerhalb einer Aktivierungs- Frist von beispielsweise zwei Wochen muss die Sparerperson diesen Aktivierungskode für die endgültige Aktivierung des Sparvorhabens in ein entsprechendes Aktivierungskode-Eingabefeld eingeben, das von dem Sparvorhaben-Applikationsprogramm generiert wird. Bei Eingabe des korrekten Aktivierungskodes wird das Sparvorhaben endgültig freigegeben. Falls die Eingabe des korrekten Aktivierungskodes nicht, nicht korrekt oder nicht rechtzeitig vor Ablauf der Aktivierungs- Frist eingegeben wird, wird das Sparvorhaben nicht freigegeben. In diesem Fall können beispielsweise alle bereits eingegangenen Spenden wieder auf die Kontokorrentkonten der Spendenpersonen zurücküberwiesen werden.

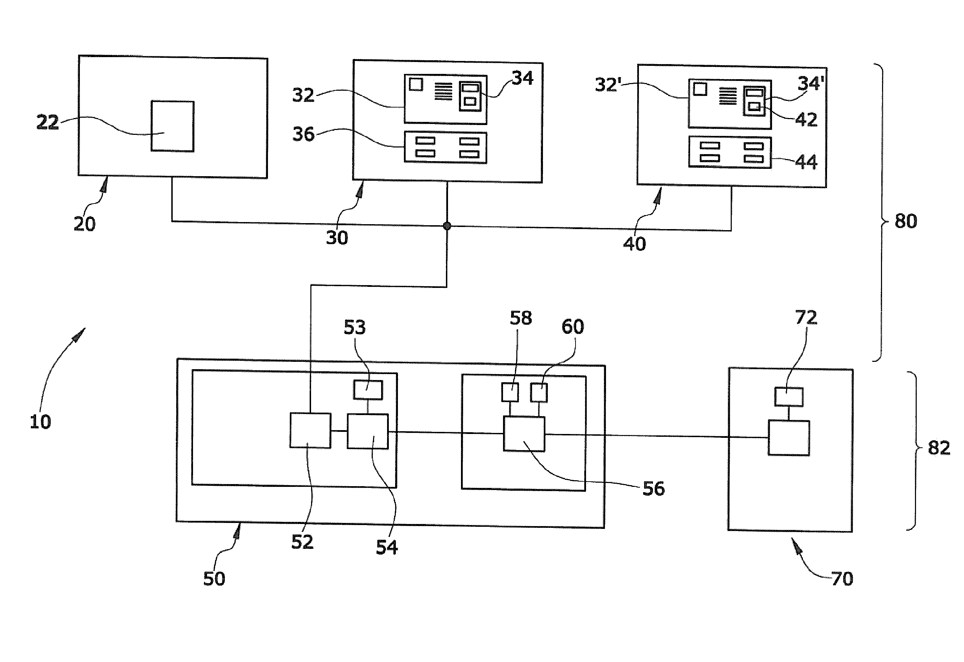

Im Folgenden wird ein Ausführungsbeispiel der Erfindung anhand der Zeichnung näher erläutert.

Die Figur zeigt schematisch eine Anordnung zur Einrichtung und Durchführung eines Vielspender-Sparvorhabens.

In der Figur ist im Wesentlichen die Struktur einer Anordnung 10 zur Einrichtung und Durchführung eines Vielspender-Sparvorhabens dargestellt.

Die dargestellte Anordnung 10 lässt sich in eine Internetzone 80 und eine Bankenzone 82 aufteilen. In der Internetzone 80 sind alle Elemente über das Internet physisch durch im Prinzip unsichere Verbindungen miteinander verbunden. Zu der Internetzone 80 zählt ein Soziafnetzwerk-Server 20 eines Sozialnetzwerks, wie beispielsweise Facebook. Der Sozialnetzwerk-Server 20 weist unter anderem eine Mitglieder-Datenbank 22 auf, in der Datensätze mit Informationen über die Mitglieder des Sozialnetzwerks gespeichert sind. Der Sozialnetzwerk-Server 20 kann aus den personenbezogenen Informationen über jedes Sozialnetzwerk-Mitglied eine individuelle Mitglieder-Webseite 32,32' generieren, die sich auf Computern 30,40 von hierzu autorisierten Soziainetzwerk-Mitgliedern anzeigen lassen.

Zu jedem Mitglieder-Datensatz auf der Mitglieder-Datenbank 22 gehört auch eine eindeutige und einmalige Mitgliederkennung, die durch den Soziainetzwerk-Server 20 bei der Anlage des Datensatzes für ein neues Mitglieds generiert wird, und die über die gesamte Lebenszeit der Mitgliedschaft unverändert bleibt.

Zu der Internet-Zone 80 zählen auch ein Sparerperson-Computer 30 und einen Spenderperson-Computer 40, die mit Internet-Browsern ausgestattet sind, über die die von dem Soziainetzwerk-Server 20 augerufenen Mitglieder-Webseiten 32 dargestellt werden können. Die Mitglieder-Webseiten 32,32' zeigen zum Einen individuelle Informationen des jeweiligen Sozialnetzwerk-Mitglieds. Zum anderen weisen die Mitglieder-Webseiten 32,32' jeweils einen Rahmen 34 auf, beispielsweise einen sogenannten iFrame, in dem Dritte ihre eigene Inhalte ausführen und anzeigen lassen können. Ein Dritter im vorgenannten Sinne ist vorliegend ein Sparerperson-Bankhaus, das einen Bankhaus-Server 50 betreibt, der ebenfalls an die Internetzone 80 angeschlossen ist.

Auf dem Bankhaus-Server 50 läuft ein Sparvorhaben-Applikationsprogramm 52, das die Kommunikation zwischen den Computern 30,40 einerseits und dem Bankhaus-Server 50 andererseits übernimmt. Der Bankhaus-Server 50 ist beispielsweise bei einem von dem Bankhaus zertifizierten Hoster angeordnet. Das Sparvorhaben-Applikationsprogramm 52 ist also in einem sicheren Bereich angeordnet, und hat während der Kommunikation mit den Computern 30,40 keine direkte Verbindung zu dem Sozialnetzwerk-Server 20. Die Verbindung zwischen dem Sparvorhaben- Applikationsprogramm 52 und den Computern 30,40 wird durch SSL geschützt, so dass alle Daten, die die Sparerperson oder die Spenderperson in entsprechende Eingabemasken an ihren Computern 30,40 eingegeben, verschlüsselt an das Applikationsprogramm 52 übermittelt werden. Aus Sicht des Sparvorhaben- Applikationsprogramms 52 werden alle Abfragen auf Validität der in die Eingabemasken eingegebenen Daten nicht in dem Browsern der Computer 30,40, sondern auf dem Bankhaus-Server 50 durchgeführt.

Auf dem Bankhaus-Server 50 ist ferner ein Spenden-Steuerungsprogramm 54 vorgesehen, das auf einen Sparvorhaben-Datensatz 53 zugreifen kann. Das Spenden-Steuerungsprogramm 54 hat eine direkte Schnittstelle mit dem Sparvorhaben- Applikationsprogramm 52. Schließlich weist der Bankhaus-Server 50 auch eine Geldverkehr-Steuerung 56 auf, die direkten Zugriff auf ein Sparerperson-Kontokorrentkonto 58 sowie auf ein Verrechnungskonto 60 auf dem Bankhaus-Server 50 hat. Ferner kommuniziert die Geldverkehr-Steuerung 56 auf dem Server 50 des Sparerperson-Bankhauses mit einer Geldverkehr-Steuerung 74 auf einem Server 70 eines Spendenperson-Bankhauses. Die Geldverkehr-Steuerung 74 auf dem Server 70 des Spenderperson-Bankhauses hat direkten Zugriff auf ein Spendenperson-Kontokorrentkonto 72 auf dem vorgenannten Server 70.

Zum Einrichten eines Sparvorhabens installiert die Sparerperson eine Sparvorhaben- Applikation innerhalb ihrer Sozialnetzwerk-Webseite, wodurch eine Verbindung von dem Sparerperson-Computer 30 zu dem Sparvorhaben-Applikationsprogramm 52 hergestellt wird. Anschließend lädt das Sparvorhaben-Applikationsprogramm 52 eine Sparvorhaben-Eingabemaske 36 zu dem Sparerperson-Computer 30 herunter. Die Sparperson füllt die Sparvorhaben- Eingabemaske 36 aus, und gibt hierbei insbesondere ihren Namen, die Kontonummer und die Bankleitzahl ihres Kontokorrentkontos 58 als Identifikation des Kontokorrentkontos 58, einen Ziel-Sparbetrag, einen Spar-Endzeitpunkt und einen Spargegenstand an.

Alle vorgenannten Spardaten werden von dem Sparvorhaben-Applikationsprogramm 52 über das Internet an das Spenden-Steuerungsprogramm 54 übergeben, das die Eingaben prüft, und insbesondere prüft, ob das in den Spardaten angegebene Kontokorrentkonto 58 der Sparerperson existiert. Falls dies nicht der Fall sein sollte, erhält die Sparerperson einen Hinweis, dass sie ein Kontokorrentkonto bei dem Sparerperson-Bankhaus zur Nutzung der Sparvorhaben- Applikation benötigt, und bietet die Eröffnung eines derartigen Kontokorrentkontos an.

Sofern die Prüfung der Spardaten positiv war, wird von dem Spenden-Steuerungsprogramm die Einrichtung eines Verrechnungskontos 60 initiiert, auf dem der jeweils akkumulierte Ist- Sparbetrag festgehalten wird. Ferner wird durch das Sparvorhaben- Applikationsprogramm 52 auf der Mitglieder-Seite 32,32' der Sparperson ein Spendenschalter 42 eingerichtet. Von diesem Zeitpunkt an können Dritte einen Spendenbetrag für das Sparvorhaben spenden.

Schließlich wird von dem Spenden-Steuerungsprogramm 54 ein Aktivierungskode generiert. Anschließend initiiert das Spenden-Steuerungsprogramm 54 eine Verifizierungsüberweisung eines geringen Verifizierungsbetrags unter Angabe des Aktivierungskodes von dem Sparerperson- Kontokorrentkonto 53 auf das zuvor bereits eingerichtete Sparbetrag-Verrechnungskonto 60.

Für eine endgültige Freigabe des Sparvorhabens muss die Sparerperson den Aktivierungskode, den sie ihrem Kontoauszug, der die Verifizierungsüberweisung ausweist, unter "Verwendungszweck" entnehmen kann, in ein entsprechendes Eingabefeld einer Aktivierungsmaske des Sparvorhaben- Applikationsprogramms 52 eingeben. Erst nach Eingabe des Aktivierungskodes steht der auf dem Verrechnungskonto 60 gesammelte Betrag der Sparperson zu. Wird der Aktivierungskode innerhalb einer festgelegten Frist, beispielsweise 14 Tage, nicht eingegeben, werden die auf dem Verrechnungskonto 60 gesammelten Spendenbeträge mit Hilfe des DTAUS- Verfahrens aud sie Kontokorrentkonten der jeweiligen Spendenpersonen zurück transferiert.

Sobald das Sparvorhaben freigegeben ist, können über einen Newsfeed die mit der Sparerperson verbundenen Personen des Sozialnetzwerks hierüber informiert werden. Durch Anklicken des Newsfeed wird die potentielle Spenderperson zu einer Webseite geleitet, von der die Spenderperson eine Spendeneingabemaske 44 in Ihren Computer 40 herunterladen muss, wenn sie etwas zu dem Sparvorhaben spenden möchte.

Die Spenderperson gibt in die Spendeneingabemaske 44 Ihren Namen, den Spendenbetrag, die Kontonummer und die Bankleitzahl ihres Kontokorrentkontos 72 sowie gegebenenfalls einen Text in ein Textfeld ein. Anschließend bestätigt sie ihre Spende durch Anklicken einer Freigabetaste.

Die eingegebenen Spendendaten werden von dem Sparvorhaben-Applikationsprogramm 52 und das Spenden-Steuerungsprogramm 54 an die Geldverkehrssteuerung 56 weitergegeben, die über einen Lastschrifteinzug-Transfer von dem Kontokorrentkonto 72 der Spendenperson den Spendenbetrag einzieht, und auf dem Verrechnungskonto 60 gutschreibt. Ferner erhält das Sparvorhaben-Applikationsprogramm 52 von der Geldverkehrssteuerung 56 eine entsprechende Nachricht. Das Sparvorhaben- Applikationsprogramm 52 veranlasst anschließend eine entsprechende Statusanzeige über den auf dem Verrechnungskonto 60 akkumulierten Ist-Sparbetrag auf der Mitglieder-Webseite 31,32' der Sparerperson, wobei die Statusanzeige beispielsweise eine prozentuale Anzeige des Ist-Sparbetrags im Verhältnis zum Ziel- Sparbetrag sein kann.

Bei jedem Eingang eines Spendenbetrags auf dem Verrechnungskonto 60 wird das Erreichen des Ziel-Sparbetrags und regelmäßig, beispielsweise täglich, das Erreichen des Spar-Endzeitpunktes geprüft. Bei Erreichen des Ziel-Sparbetrags oder des Spar-Endzeitpunktes wird durch das Spenden-Steuerungsprogramm 54 der Ist-Sparbetrag von dem Sparbetrag-Verrechnungskonto 60 bzw. einem parallelen Kontokorrentkonto auf das Sparerperson- Kontokorrentkonto 58 transferiert. Anschließend wird das Sparvorhaben durch das Spenden-Steuerungsprogramm 54 vollständig beendet, so dass auch keine Spenden mehr angenommen werden.

## Patentansprüche

1. Anordnung (10) zur Einrichtung und Durchführung eines Vielspender- Sparvorhabens durch eine Sparerperson im Rahmen eines Internet- Sozialnetzwerks, wobei die Sparerperson und eine Spenderperson Mitglieder des Sozialnetzwerks sind, die Sparerperson über ein eigenes Kontokorrentkonto (58) bei einem Sparerperson-Bankhaus verfügt und die Spenderperson über ein Kontokorrentkonto (72) bei einem Spender-Bankhaus verfügt, mit
einem Sozialnetzwerk- Server (20) mit einer Mitglieder-Datenbank (22), in der Datensätze der Mitglieder zur Generierung einer individuellen Mitglieder-Webseite (32,32') gespeichert sind,
einem Sparvorhaben- Datensatz (53) auf einem Server (50) des Sparerperson-Bankhauses, der eine Sparerperson-Identifikation, eine Sparerperson- Kontokorrentkonto-Identifikation und einen Ziel-Sparbetrag enthält,
einem Sparbetrag-Verrechnungskonto (60) auf dem Server (50) des Sparerperson- Bankhauses, auf dem ein Ist-Sparbetrag akkumuliert wird,
einem Spenden- Steuerungsprogramm (54) auf einem Server (50) des Sparerperson- Bankhauses, das einen durch die Spenderperson eingegebenen Spendenbetrag von einem durch die Spenderperson eingegeben Spenderperson-Kontokurrentkonto (72) auf dem Sparbetrag-Verrechnungskonto (60) gutschreibt, und
einem Sparvorhaben- Applikationsprogramm (52), das innerhalb der Mitglieder-Webseite (32,32') der Sparerperson Steuerelemente und/oder Informationen über das Sparvorhaben anzeigt.

2. Anordnung (10) zur Durchführung eines Vielspender- Sparvorhabens gemäß Anspruch 1, wobei das Sparvorhaben- Applikationsprogramm (52) den auf dem Verrechnungskonto (60) akkumulierten Ist-Sparbetrag auf der Mitglieder-Webseite (31,32') der Sparerperson angezeigt.

3. Anordnung zur Durchführung eines Vielspender- Sparvorhabens gemäß Anspruch 1 oder 2, wobei das Sparvorhaben-Applikationsprogramm (52) einen auf der Mitglieder-Webseite (32,32') der Sparerperson angezeigten Spendenschalter (42) generiert, der mit einer Spendeneingabe-Seite (44) auf dem Server (50) des Sparerperson-Bankhauses verknüpft ist.

4. Verfahren zur Durchführung eines Vielspender- Sparvorhabens mit der Anordnung (10) gemäß einem der Ansprüche 1-3, mit den Verfahrensschritten:
Aufruf des Sparvorhaben- Applikationsprogramms (52) durch die Spenderperson,
Eingabe der Spendendaten einschließlich eines Spendenbetrags und der Angaben zu dem Spenderperson-Kontokorrentkonto durch die Spenderperson in das Sparvorhaben- Applikationsprogramm (52),
Übermittlung der Spendendaten von dem Sparvorhaben-Applikationsprogramm (52) an das Spenden-Steuerungsprogramm (54), und
Transfer des Spendenbetrags durch das Spenden-Steuerungsprogramm (54) von dem Spenderperson-Kontokorrentkonto (72) auf das Verrechnungskonto (60).

5. Verfahren zur Durchführung eines Vielspender- Sparvorhabens mit der Anordnung (10) gemäß einem der Ansprüche 1-3 oder gemäß Anspruch 4, mit den Verfahrensschritten:
Prüfung des Erreichens des Ziel-Sparbetrags oder eines durch die Sparerperson bei der Einrichtung des Sparvorhabens angegebenen Spar-Endzeitpunktes, und
bei Erreichen des Ziel-Sparbetrag oder des Spar-Endzeitpunktes: Überweisung des Ist-Sparbetrags von dem Sparbetrag-Verrechnungskonto (60) auf das Sparerperson- Kontokorrentkonto (58) durch das Spenden-Steuerungsprogramm.

6. Verfahren zur Einrichtung eines Vielspender- Sparvorhabens mit der Anordnung (10) gemäß einem der Ansprüche 1-3, mit den Verfahrensschritten:
Eingabe der Spardaten des Sparvorhabens einschließlich einer Angabe des Sparerperson-Kontokurrentkontos (58) und des Ziel-Sparbetrags über das Sparvorhaben-Applikationsprogramm (52),
Übertragung der Spardaten von dem Sparvorhaben-Applikationsprogramm (52) zu dem Sparvorhabens-Steuerungsprogramm (54),
Prüfung der Spardaten durch das Sparvorhaben-Steuerungsprogramm (54),
bei positiver Spardaten- Prüfung: Übertragung einer Freigabe des Sparvorhabens von dem Sparvorhaben-Steuerungsprogramm (54) an das Sparvorhaben-Applikationsprogramm (52), und
Einrichtung eines Spendenschalters (42) durch das Sparvorhaben- Applikationsprogramm (52) auf der Mitglieder-Webseite (32') der Sparerperson.

7. Verfahren zur Einrichtung eines Vielspender- Sparvorhabens nach Anspruch 6, mit den Verfahrensschritten:
nach der positiven Prüfung der Spardaten:
Generierung eines Aktivierungskodes durch das Sparvorhaben- Steuerungsprogramm (54) oder das Sparvorhaben- Applikationsprogramm (52),
Durchführung einer Verifizierungsüberweisung durch das Sparvorhaben- Steuerungsprogramm (54) durch Überweisung eines Verifizierungsbetrags und unter Angabe des Aktivierungskodes von dem Sparerperson- Kontokorrentkonto (58) auf das Sparbetrag-Verrechnungskonto (60),
Eingabe des Aktivierungskodes durch die Sparerperson, und Freigabe des Sparvorhabens.
